Europäisches Patentamt

European Patent Office

Office européen des brevets

(11) Publication number: **0 058 025**
**B1**

# EUROPEAN PATENT SPECIFICATION

(45) Date of publication of patent specification: **28.11.84**

(21) Application number: **82300469.2**

(22) Date of filing: **29.01.82**

(51) Int. Cl.³: **H 02 K 21/00,** H 02 K 7/116,
H 02 K 21/14

(54) **Rotary electrical machines.**

(30) Priority: **10.02.81 GB 8104103**

(43) Date of publication of application:
**18.08.82 Bulletin 82/33**

(45) Publication of the grant of the patent:
**28.11.84 Bulletin 84/48**

(84) Designated Contracting States:
**DE FR GB IT**

(56) References cited:
**DE-C- 839 061**
**FR-A-2 295 619**
**GB-A-1 007 524**
**GB-A-2 051 496**

(73) Proprietor: **LUCAS INDUSTRIES public limited
company**
**Great King Street**
**Birmingham, B19 2XF (GB)**

(72) Inventor: **Howard, John Redman**
**11 Green Lane**
**Kensworth Donstable Bedfordshire (GB)**

(74) Representative: **Cuddon, George Desmond et al**
**Marks & Clerk Alpha Tower Suffolk Street**
**Queensway**
**Birmingham B1 1TT (GB)**

Courier Press, Leamington Spa, England.

## Description

This invention relates to rotary electrical machines having permanent magnet rotors.

It is known to provide rotary electrical machines having permanent magnet rotors. In a generator the use of such rotors gives rise to difficulties in regulating output voltage under varying conditions of external loads and shaft speeds. In a motor there are corresponding difficulties in regulating the output speed. It has been proposed to provide regulation as aforesaid by modification of the field of the rotor, this modification being effected by relative movement between parts of the rotor. An electric machine having means for providing relative rotation between permanent magnet rotor parts is disclosed in US Patent 3,713,015.

It is necessary that the aforesaid relative rotation is carried out while the machine is in operation, and the rotor may therefore be turning at a high speed. The force required to effect this relative rotation corresponds to the resulting change in the input or output power of the machine, and may therefore be considerable. It has therefore been found necessary to effect relative rotation by means of a power actuator. In US Patent 3,713,015 a linear actuator is coupled to one rotor part through a sliding collar and skew splines. Such an arrangement results in high frictional forces between the relatively moving parts.

It has also been proposed, in UK Patent Application 2,051,496A, to incorporate a linear hydraulic actuator within the rotor and to apply a fluid pressure thereto through the rotor shaft. Such an arrangement introduces difficulties in making the required hydraulic connections to a shaft which may be rotating at high speed.

German patent 839061 discloses a small electric generator for a pedal cycle, in which permanent magnet rotors are driven by an input shaft through differential gearing, one of the rotor magnets being acted on by a flyweight arrangement which is responsive to the speed of the input shaft, whereby the relative angular positions of the rotor magnets are variable with shaft speed. In this reference the relative positions of the rotor magnets cannot therefore be varied independently of shaft speed. The output voltage of a generator may vary with changes in an external load as well as with generator speed, and where the output voltage is to be maintained constant under varying load it is necessary that the relative position of the rotor magnets shall be responsive to factors other than shaft speed.

It is an object of the present invention to provide a rotary electrical machine having a permanent magnet rotor, in which modification of the rotor field is effected by relative movement between parts of the rotor, and in which this relative movement can be induced by an actuator which is mounted on a relatively stationary part of the machine and which can be operated independently of rotation of the rotor, the coupling between the actuator and the rotor being entirely rotary.

According to the invention there is provided a permanent magnet rotary electrical machine comprising a rotor having a first permanent magnet pole structure and a second pole structure, a stator winding surrounding said rotor, a drive shaft and first and second driving connections between said shaft and the first and second pole structures respectively, said first driving connection including a differential gear having a first input element drivingly connected to said shaft, a second input element and an output element which is drivingly coupled to one of said pole structures, and an actuator for rotating said second input element, characterised in that said actuator is operable to rotate said second input element relative to a fixed housing of the machine, independently of rotation of said rotor, and in that said second driving connection comprises a gear arrangement having velocity ratio which is equal to that of said differential gear when the second input element is stationary.

In a particular embodiment said differential gear is an epicyclic gear and said means for drivingly connecting said one pole structure to said shaft comprises a second epicyclic gear having a first input element drivingly coupled to said shaft, a reaction element and an output element drivingly coupled to said one pole structure, the velocity ratios of said first and second epicyclic gears being identical when the second input element of said first differential gear is stationary.

In one embodiment, said first and second pole structures each comprises a plurality of permanent magnets.

In a further embodiment, said second pole structure comprises a plurality of first elements of a relatively high permeability and a plurality of second elements of a relatively lower permeability, said first and second pole structures being relatively angularly movable between a first relative position in which said first elements provide substantially the whole of a flux path between the poles of said first structure, and a second relative position in which said second elements lie in said flux path, whereby in said second relative position flux from said first pole structure is directed externally of said rotor.

Embodiments of the invention will now be described by way of example only and with reference to the accompanying drawings, in which:—

Figure 1 is a longitudinal half-section through an electric generator, and

Figures 2 and 3 show transverse sections of an alternative form of rotor, in respective operating positions.

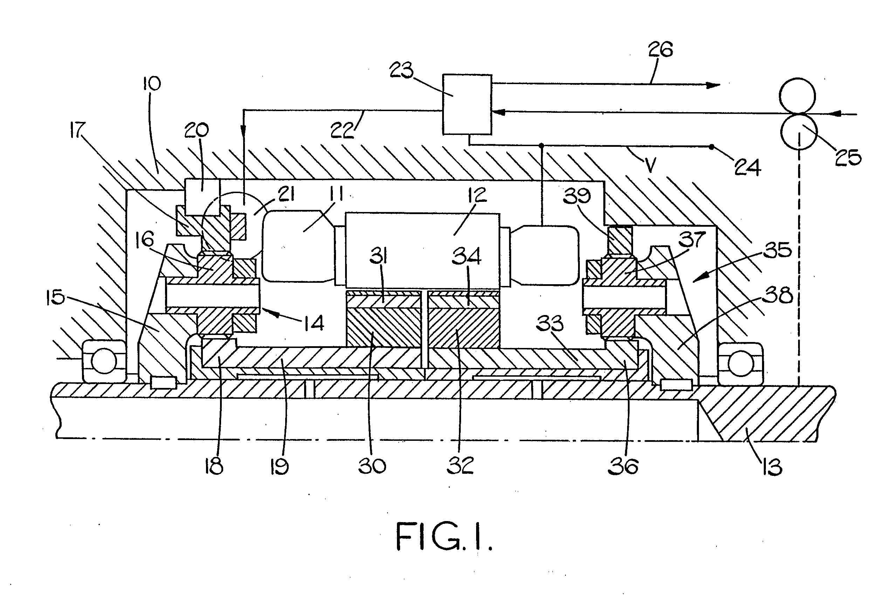

The generator shown in Figure 1 has a fixed housing 10 which carries stator windings 11 on a former 12. A drive shaft 13 is journalled in the housing 10. A first differential epicyclic gear train 14 comprises a carrier 15 keyed to the shaft 13 and supporting a plurality of planet gears 16. The gears 16 engage both an external ring gear 17 and a sun gear 18 secured to a sleeve 19 which is rotatable on the shaft 13. The ring gear 17 is mounted on a bearing 20 and is rotatable relative to the housing 10 by means of a suitable actuator 21. In the particular embodiment the actuator 21 is a hydraulic piston and cylinder unit operable by a servo pressure in a line 22, the magnitude of this pressure being regulated by a control arrangement 23 which is responsive, inter alia, to the voltage V at an output terminal 24 of the generator. The servo pressure in line 22 is intermediate the pressure at the outlet of a positive displacement pump 25 which is driven by the shaft 13, and the pressure in a return line 26. In alternative embodiments the arrangement 23 may be responsive to the speed of the shaft 13, or to both voltage V and shaft speed.

Secured to the sleeve 19 is a toroidal yoke 30 around the circumference of which are spaced a first plurality of samarium cobalt permanent magnet elements 31. A further toroidal yoke 32 is secured to a sleeve 33 which is rotatable on the shaft 13, the yoke 32 also carrying a plurality of circumferentially spaced permanent magnet elements 34.

A second epicyclic gear train 35 comprises a sun gear 36 integral with the sleeve 33, a plurality of planet gears 37 mounted on a carrier 38 which is keyed to the shaft 13, and a ring reaction member 39 fixed to the housing 10. Sun gears 18, 36 have an identical number of teeth, as have the planet gears 16, 37 and the ring gears 17, 39. The arrangement is therefore such that with the ring gear 17 held stationary by the actuator 21, the yokes 30, 32 of the rotor are driven at identical speeds. If, however, the ring gear 17 is moved by the actuator 21 the yoke 30 will be rotated with respect to the yoke 32. Since the pitch circle diameter of the ring gear 17 is twice that of the sun gear 18, the angular movement of the yoke 30 relative to the yoke 32 will be twice that of the gear 17.

The permanent magnet elements 31, 34 are each arranged in heteropolar fashion such that with the shaft 13 at rest, like poles of the elements 31, 34 are aligned, whereby combined flux from the elements 31, 34 passes externally of the rotor as a whole and induces a voltage in the stator winding 11. At predetermined levels of voltage in V or the speed of the shaft 13 the control arrangement 23 causes the servo pressure in line 22 to be sufficient to rotate the ring gear 17 and move the elements 31, 34 out of polar alignment. The actuator 21 is such that the elements 31 can be moved up to a maximum of one pitch relative to the elements 34, in which condition unlike poles of the elements 31, 34 are aligned and the flux from these elements is effectively shorted out.

Intermediate relative positions of the elements 31, 34 under control of the arrangements 23, may thus be used to regulate the output voltage V in accordance with the speed of the shaft 13, to maintain the voltage V substantially constant.

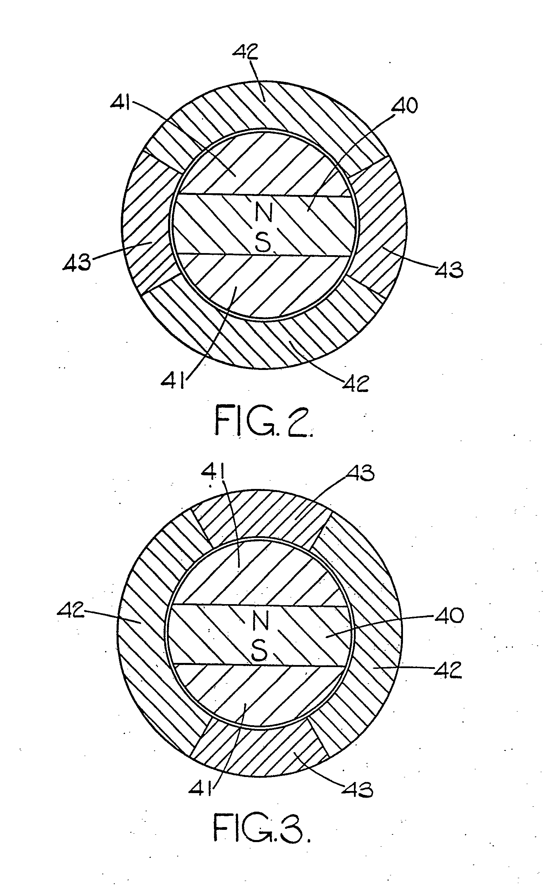

In the arrangement of Figure 1 the yokes 30, 32 and elements 31, 34 provide two pole structures each of which includes permanent magnets. Figures 2 and 3 show an alternative form of rotor in which only an inner one of two pole structures comprises a samarium cobalt permanent magnet 40 sandwiched between soft iron pole pieces 41, the assembly being mounted on, for example, the sleeve 33 in Figure 1. An outer pole structure closely surrounds the inner pole structure and is mounted on the other sleeve 19 for rotation relative to the inner pole structure. The outer pole structure comprises a composite tube consisting of two diametrally opposed soft iron pole pieces 42 and two non-magnetic steel sectors 43. For this embodiment it is necessary that the actuator 21 of Figure 1 shall be capable of rotating the outer pole structure through 90° from the position shown in Figure 2 to that shown in Figure 3. In the relative positions of the inner and outer pole structures shown in Figure 2, the flux from the magnet 40 passes through the soft iron elements 42 to coact with the stator windings. In the relative positions shown in Figure 3 the flux from the magnet 40 is shorted through the parts 42. The inner and outer pole structures may be moved to intermediate relative positions to control the output voltage V of the generator.

## Claims

1. A permanent magnet rotary electrical machine comprising a rotor having a first permanent magnet pole structure (31) and a second pole structure (34), a stator winding (12) surrounding said rotor, a drive shaft (13) and first and second driving connections between said shaft (13) and the first and second pole structures (31, 34) respectively, said first driving connection including a differential gear (14) having a first input element (15) drivingly connected to said shaft (13), a second input element (17) and an output element (18) which is drivingly coupled to one of said pole structures (31), and an actuator (21) for rotating said second input element, (17) characterised in that said actuator (21) is operable to rotate said second input element (17) relative to a fixed housing (10) of the machine, independently of rotation of said rotor, and in that said second driving connection comprises a gear arrangement (35) having a velocity ratio which is equal to that of said differential gear (14) when the second input element (17) is stationary.

2. An electrical machine as claimed in claim 1, in which said differential gear comprises an epicyclic gear train (14).

3. An electrical machine as claimed in claim 2, in which said gear arrangement (35) comprises a second epicyclic gear train having a first input element (38) drivingly coupled to said shaft (13), a fixed reaction element (39) and an output element (36) drivingly coupled to said second pole structure (34).

4. An electrical machine as claimed in any preceding claim in which said actuator comprises a fluid pressure operated device (21).

5. An electrical machine as claimed in claim 4 which includes a control device (23), responsive to an operating condition (V) of the machine for regulating a control pressure for said pressure-operated device (21).

6. An electrical machine as claimed in any preceding claim, in which said first and second pole structures (30, 31 and 32, 34) each comprises a plurality of permanent magnets (31, 34).

7. An electrical machine as claimed in any of claims 1 to 5, in which one of said pole structures comprises a plurality of first elements (42) of a relatively high permeability and a plurality of second elements (43) of a relatively lower permeability, said first and second pole structures being relatively angularly movable between a first relative position in which said first elements (42) provide substantially the whole of a flux path between the poles of the other of said structures (40), and a second relative position in which said second elements (43) lie in said flux plath, whereby in said second relative position flux from said other pole structure (40) is directed externally of said rotor.

8. A permanent magnet rotary electrical machine, substantially as hereinbefore described with reference to Figure 1, or to Figure 1 as modified by Figures 2 and 3, of the accompanying drawings.

## Patentansprüche

1. Drehende elektrische Permanent-Magnet-Maschine mit einem Rotor mit einer ersten permanent-magnetischen Polstruktur (31) un einer zweiten Polstruktur (34), einer den Rotor umgebenden Statorwicklung (12), einer Antriebswelle (13) und ersten und zweiten Antriebsverbindungen zwischen der Welle (13) und jeweils den ersten und zweiten Polstrukturen (31, 34), wobei die erste Antriebsverbindung ein Differentialgetriebe (14) aufweist mit einem ersten Eingangselement (15), das zum Antrieb mit der Welle (13) verbunden ist, einem zweiten Eingangselement (17) und einem Ausgangselement (18), welches zum Antrieb mit einer der Polstrukturen (31) verbunden ist, und einem Antrieb (21) zum Rotieren des zweiten Eingangselements (17), dadurch gekennzeichnet, daß der Antrieb (21) betreibbar ist zum Rotieren des zweiten Eingangselements (17) relativ zu einem festen Gehäuse (10) der Maschine unabhängig von der Rotation des Rotors, und daß die zweite Antriebsverbindung eine Getriebeanordnung (35) mit einem Geschwindigkeitsverhältnis aufweist, welches gleich ist jenem des Differentialgetriebes (14), wenn das zweite Eingangselement (17) stationär ist.

2. Elektrische Maschine nach Anspruch 1, bei der das Differentialgetriebe ein Planetengetriebe (14) aufweist.

3. Elektrische Maschine nach Anspruch 2, bei der die Getriebeanordnung (35) ein zweites Planetengetriebe mit einem ersten Eingangselement (38), das mit der Welle (13) zum Antrieb verbunden ist, ein festes Reaktionselement (39) und ein Ausgangselement (36), das mit der zweiten Polstruktur (34) zum Antrieb verbunden ist, aufweist.

4. Elektrische Maschine nach einem der vorhergehenden Ansprüche, bei der der Antrieb eine Fluid-Druck-betriebene Einrichtung (21) aufweist.

5. Elektrische Maschine nach Anspruch 4, die eine Steuereinrichtung (23) aufweist, die auf eine Betriebsbedingung (V) der Maschine zum Regulieren eines Steuerdrucks für die Druckbetriebene Einrichtung (21) anspricht.

6. Elektrische Maschine nach einem der vorhergehenden Ansprüche, bei der die ersten und zweiten Polstrukturen (30, 31 und 32, 34) jeweils eine Mehrzahl von Permanentmagneten (31, 34) aufweisen.

7. Elektrische Maschine nach einem der Ansprüche 1 bis 5, bei der eine der Polstrukturen eine Mehrzahl von ersten Elementen (42) relativ hoher Permeabilität und eine Mehrzahl von zweiten Elementen (43) relativ niedriger Permeabilität aufweist, wobei die ersten und zweiten Polstrukturen gegeneinander winkelmäßig bewegbar sind zwischen einer ersten relativen Position, bei der die ersten Elemente (42) im wesentlichen das Ganze eines Fluß-Pfades zwischen den Polen der anderen der Strukturen (40) bilden, und einer zweiten relativen Position, in der die zweiten Elemente (43) in diesem Fluß-Pfad liegen, wodurch in der zweiten relativen Position Fluß von der anderen Polstruktur (40) aus dem Rotor heraus gerichtet wird.

8. Rotierende elektrische Permanent-Magnet-Maschine im wesentlichen wie zuvor beschrieben mit Bezug auf Fig. 1, oder auf Fig. 1 modifiziert durch Fig. 2 und 3 der anliegenden Zeichnungen.

## Revendications

1. Machine électrique rotative à aimants permanents comportant un rotor ayant une première structure polaire (31) à aimant permanent et une seconde structure polaire (34), un enroulement statorique (12) entourant le rotor, un arbre d'entraînement (13) et un premier et un second accouplement d'entraînement entre l'arbre (13) et respectivement les première et seconde structures polaires (31, 34), le premier accouplement d'entraînement comprenant un train (14) d'engrenages différentiels ayant un premier organe d'entrée (15) à accouplement d'entraînement avec l'arbre (13), un second organe d'entrée (17) et un organe, de sortie (18) à accouplement d'entraînement avec une des structures polaires (31) et un actionneur (21) pour faire tourner le second organe d'entrée (17), caractérisé en ce que l'actionner (21) est prévu pour faire tourner le second organe d'entrée (17) par rapport à un boîtier fixe (10) de la machine, indépendamment de la rotaton du rotor, et en ce que le second accouplement d'entraînement comprend un dispositif (35) à engrenages dont le rapport de vitesses est égal à celui du train (14) d'engrenages différentiels lorsque le second organe d'entrée (17) est immobile.

2. Machine électrique selon la revendication 1, dans laquelle le train d'engrenages différentiels comprend un train d'engrenages épicycloïdaux (14).

3. Machine électrique selon la revendication 2, dans laquelle le dispositif (35) à engrenages comporte un second train d'engrenages épicycloïdaux ayant un premier organe d'entrée (38) à accouplement d'entraînement avec l'arbre (13), un organe fixe (39) de réaction et un organe de sortie (36) à accouplement d'entraînement avec la seconde structure polaire (34).

4. Machine électrique selon l'une quelconque des revendications précédentes, dans laquelle l'actionneur compte un dispositif (21) commmandé par la pression d'un fluide.

5. Machine électrique selon la revendication 4, qui comporte un dispositif de commande (23) réagissant à un état de fonctionnement (V) de la machine pour réguler une pression de commande pour le dispositif (21) commandé par pression.

6. Machine électrique selon l'une quelconque des revendications précédentes, dans laquelle les première et seconde structures polaires (30, 31 et 32, 34) comportent chacune un certain nombre d'aimants permanents (31, 34).

7. Machine électrique selon l'une quelconque des revendications 1 à 5, dans laquelle une des structures polaires comporte un certain nombre de premiers éléments (42) à perméabilité relativement grande et un certain nombre de seconds éléments (43) à perméabilité relativement moindre, les première et seconde structures polaires étant relativement mobiles angulairement entre une première position relative dans laquelle les premiers éléments (42) fournissent à peu près la totalité d'un parcours de flux entre les poles de l'autre des structures (40), et une seconde position relative dans laquelle les seconds éléments (43) se trouvent sur le parcours du flux, par lesquels, dans ladite seconde position relative, le flux provenant de l'autre structure polaire (40) est dirigé vers l'extérieur du rotor.

8. Machine électriv à aimants permanents, pour l'essentiel comme décrit précédemment en référence à la Fig. 1, ou à la Figure 1 modifiée par les Fig. 2 et 3, du dessin annexé.

FIG.I.

0058025

FIG. 2.

FIG. 3.